# EUROPEAN PATENT SPECIFICATION

(11) **EP 4 472 907 B1**
(45) Date of publication and mention of the grant of the patent: **15.10.2025**
(21) Application number: 23707792.0
(22) Date of filing: 01.02.2023
(51) Int. Cl.: B65G 15/64, B65G 39/16

(54) **A GUIDE SYSTEM FOR A CONVEYOR BELT**
EIN FÜHRUNGSSYSTEM FÜR EIN FÖRDERBAND
UN SYSTÊME DE GUIDAGE POUR UNE BANDE DE CONVOYAGE

(30) Priority: 03.02.2022 IT 202200001913
(43) Date of publication of application: 11.12.2024
(73) Proprietor: System Ceramics S.p.A., 41042 Fiorano Modenese MO (IT)
(72) Inventor: VALENTINI, Marco, 41042 Fiorano Modenese (IT)
(74) Representative: Casadei, Giovanni
(86) International application number: PCT/IB2023/050861
(87) International publication number: WO 2023/148622

(56) References cited:
- EP-A1- 0 645 333
- CN-A- 106 743 106
- JP-A- S60 153 324
- KR-A- 20160 014 377
- US-A- 1 440 385

## Description

The present invention relates to a guide system for a conveyor belt.

In general, the invention can be usefully applied in all machines or conveyor systems that envisage the use of a conveyor belt for which a precise advancement which is constant over time along a rectilinear direction is required.

In particular, but not exclusively, the invention can be usefully applied in an ink jet decorator for decorating ceramic tiles.

As is known, an ink jet decorating machine for ceramic slabs or tiles comprises an ink jet printing head, located in a certain position, below which a conveyor belt is positioned, configured to lead the tiles or slabs to be decorated below the ink jet printing head. The belt moves continuously, so that the slabs or tiles are decorated during movement, while they transit below the printing head.

It is known that, to obtain a precise decoration, it is necessary to know at all times, in a very precise way, the position of every point of the conveyor plane with respect to a fixed reference system. This is necessary so that every pixel of the decoration, i.e. every drop of ink emitted by the printing head, is positioned in a predefined point of a given ceramic slab or tile positioned on the conveyor plane.

In particular, in the event of a conveyor belt on which the objects to be printed are positioned, it is necessary for the latter to precisely follow a predefined route. In order for this to happen, the path followed by the conveyor belt must have a known and repeatable course in every point thereof. In the longitudinal sense, i.e. the advancement direction, the positioning precision is guaranteed by the belt drawing system. In the transverse direction, i.e. perpendicular to the advancement direction, the conveyor belt is instead free to move.

As is known, the longitudinal edges of the conveyor belt are not perfectly rectilinear and parallel, mainly because of the trimming process by which they are made. The errors on the longitudinal edges are substantially due to a deviation with respect to a longitudinal direction, a deviation that can lead to a change of direction of the belt, a variation in the width of the belt or a combination of the two errors.

In current guide systems it is possible to contain the error due to the change of direction, using rails or other lateral guide devices. Instead it is not possible to effectively contain the change in width of the conveyor belt. This is because the rails or lateral guides must be located at a distance such as to enable the passage of the sections with the maximum width. In this way, the sections of the conveyor belt with the minimum width are not effectively guided.

An example of a guide system currently available is described in patent publication CN106743106. Such a guide system suffers from the faults summarised above. CN 106 743 106 A describes a guide system according to the preamble of independent claim 1.

The aim of the present invention is to offer a guide system for a conveyor belt that makes it possible to overcome the drawbacks of currently available guide systems.

The main but not only advantage of the present invention is that it enables both errors due to a change of direction and errors due to a change of width of the conveyor belt to be effectively contained.

Additional features and advantages of the present invention will become more apparent from the detailed description that follows of an embodiment of the invention in question, illustrated by way of non-limiting example in the appended figures, in which:
- figure 1 shows a schematic plan view of the guide system according to the present invention, in a first operating configuration;
- figure 2 shows a section of the guide system, executed with the plane of line II-II in figure 1;

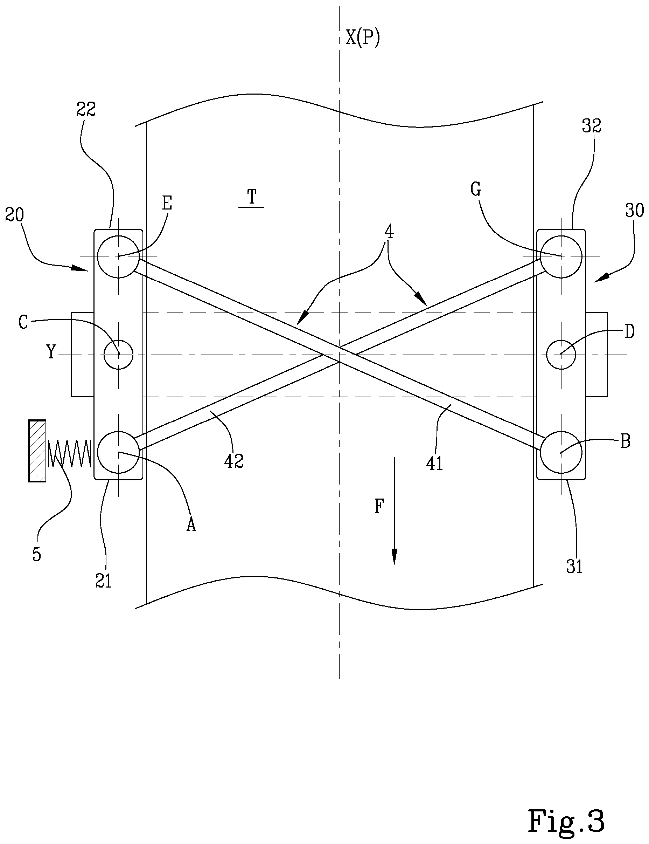

- figure 3 shows a transmission kinematic mechanism of the guide system, shown separately.

The guide system according to the present invention is particularly effective for guiding a conveyor belt (T) along a predefined advancement direction (X), but not only for this.

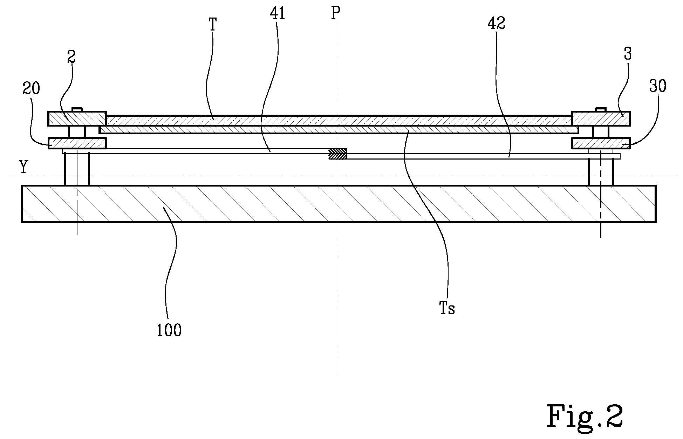

A conveyor belt substantially means a flat and flexible element, movable along an annular path defined by two or more idler rollers, rotating about axes of rotation preferably parallel and horizontal to one another. At least a main section of the annular path followed by the conveyor belt is a section along which the transport of objects takes place. Preferably, the main section is substantially horizontal and parallel to the advancement direction (X). At least along the main section, the conveyor belt (T) defines a conveyor plane for the objects. Such conveyor plane is preferably horizontal. A support plane (Ts), connected to the support frame (100) of the machine (illustrated only schematically), is located below the main section, to support the conveyor belt (T). Such support plane (Ts) is schematically illustrated in figure 2.

The appended figures schematically illustrate the main section of the conveyor belt (T) and the conveyor plane defined thereby. In the following description, reference is made to the conveyor belt (T) to indicate the main section of the conveyor belt (T) itself.

The conveyor belt (T) has a prevalent extension, or length, directed substantially parallel to the advancement direction (X), at least along the section intended to transport objects. The conveyor belt (T) also has a width, measured perpendicularly to the advancement direction (X), which substantially defines the distance between the two lateral edges of the conveyor belt (T).

Overall, the conveyor belt (T) is supported by a load-bearing frame, not illustrated in detail, which also supports the idler rollers which define the path followed by the belt (T) itself, the motor systems and other parts possibly arranged for the operation of the conveyor belt (T).

The guide system according to the present invention comprises a first guide (2) and a second guide (3), each of which is arranged to be positioned in contact with a respective side of the conveyor belt (T). In other words, the first and the second guide (2,3) are located at opposite sides of the conveyor belt (T), in contact with the latter.

In a possible embodiment, the first and the second guide (2,3) are in the form of prismatic elements provided with a longitudinal axis oriented substantially parallel to the advancement direction (X), except for any oscillations that can take place during operation. Preferably, but not necessarily, the first and the second guide (2,3) are provided with sliding elements, e.g. skids, rollers or castors, positioned so as to be in contact with the sides of the conveyor belt (T).

In another possible embodiment, not illustrated, the first and the second guide (2,3) are in the form of rollers or castors, with axes of rotation oriented so as to enable rotation in contact with the lateral edges of the conveyor belt (T). For example, in the event in which the latter is lying on a horizontal plane, at least along the section intended for transporting objects, the axes of rotation of the rollers or castors which define the first and the second guide (2,3) are vertical.

Advantageously, the first and the second guide (2,3) are movable, at least partially, towards and away from one another. Preferably, but not necessarily, the first and the second guide (2,3) are movable with respect to one another between a position of maximum mutual distance and minimum mutual distance. This enables the guides (2,3) to be able to adapt to conveyor belts (T) of different widths, or to follow the errors and deviations of the lateral edges of a conveyor belt (T).

The first and the second guide (2,3) are associated with a transmission kinematic mechanism (4), which connects the first and the second guide (2,3) to one another.

The transmission kinematic mechanism (4) comprises at least a first connecting rod (20) and a second connecting rod (30). The transmission kinematic mechanism is configured to transmit, to the guide (2) and to the second guide (3), symmetrical movements with respect to a central plane (P). In a possible embodiment of the transmission kinematic mechanism (4), the movements transmitted to the first guide (2) and to the second guide (3) are rectilinear, and are therefore equal and opposite in direction, perpendicularly to the central plane (P). In another possible embodiment, the movements transmitted to the first guide (2) and to the second guide (3) are shaped like the arc of a circle, with centres arranged in turn symmetrically with respect to the central plane (P).

In other words, the transmission kinematic mechanism (4) is structured to transmit to the first and to the second guide (2,3), or at least to respective portions, a symmetrical movement at least with respect to a central plane (P).

An actuator (5) is arranged to exercise a thrust on at least one from between the first and the second guide (2,3), which tends to move them towards one another. In other words, the thrust exercised by the actuator (5) is directed and/or oriented so as to move the first and the second guide (2,3) towards one another.

By arranging the first and the second guide (2,3) so that the central plane (P) is positioned to contain the advancement direction (X), and substantially perpendicular to the conveyor belt (T), it is possible to keep the latter substantially aligned with the advancement direction (X). In other words, by arranging the first and the second guide (2,3) so that the central plane (P) contains the advancement direction (X), and is substantially perpendicular to the conveyor plane defined by the conveyor belt (T), thanks to the guides (2,3), it is possible to keep the latter substantially aligned with the advancement direction (X).

In fact, the first and the second guide (2,3) are placed to the sides of the conveyor belt (T), and are pushed into contact with a respective side of the conveyor belt (T) by the kinematic mechanism (4) of the actuator (5). In the event in which the sides of the conveyor belt (T) are not rectilinear and/or not parallel, at least a portion of the first guide and at least a portion of the second guide (2,3), pushed by the actuator (5) and by the kinematic mechanism (4) to move towards one another symmetrically with respect to the central plane (P) which contains the advancement direction (X), are kept in contact with the conveyor belt (T) obliging it to stay, in turn, aligned with the transport direction (X).

The first guide (2) is rotatably connected to at least one of the first connecting rods (20) about a first axis of rotation (a,e). Furthermore, the first guide (2) is connected slidably, along the advancement direction (X) of the conveyor belt (T), to the other first connecting rod (20). In the illustrated embodiment, the possibility to slide is obtained by making at least one slot (S2) on the first guide (2), substantially parallel to the advancement direction (X), in which a respective pin is slidable solidly constrained to the first connecting rod (20).

Likewise, the second guide (3) is connected to at least one of the second connecting rods (30) rotatably about a first axis of rotation (b,g). Furthermore, the second guide (3) is connected slidably, along the advancement direction (X) of the conveyor belt (T), to the other second connecting rod (30). In the illustrated embodiment, the possibility to slide is obtained by making at least one slot (S3) on the second guide (3), substantially parallel to the advancement direction (X), in which a respective pin is slidable solidly constrained to the second connecting rod (30).

In a preferred embodiment, the transmission kinematic mechanism (4) comprises a first connecting rod (20) and a second connecting rod (30), associated respectively with the first guide (2) and the second guide (3). The transmission kinematic mechanism (4) further comprises a first rod (41) and a second rod (42), each of which is hinged both to the first connecting rod (20), and to the second connecting rod (30) about axes of rotation (a,b,e,g) parallel to one another. In other words, the first rod (41) is hinged to the first and to the second guide (2,3) about respective axes of rotation (E,B) parallel to one another. The second rod (42) is hinged to the first and to the second guide (2,3) about respective axes of rotation (A,G) parallel to one another. Preferably, the axes of rotation (a,b,e,g) of the two rods (41,42) are parallel to the central plane (P). Preferably, the axes of rotation (a,b,e,g) of the two rods (41,42) are perpendicular to the conveyor plane defined by the conveyor belt (T).

The first rod (41) and the second rod (42) are arranged in crossed directions to one another on a plane perpendicular to the axes of rotation (a,b,e,g). Preferably, the first and the second rod (41,42) are arranged symmetrical with respect to the central plane (P).

Preferably, the first connecting rod (20) and the second connecting rod (30) rotate about respective axes of rotation (c,d) parallel to one another and parallel to the axes of rotation (a,b,e,g) of the first and the second rod (41,42). In other words, the axis of rotation (C) of the first connecting rod (20) is located in an intermediate position between the axes of rotation (a,e) respectively of the first rod (41) and of the second rod (42). The axis of rotation (D) of the second connecting rod (30) is located in an intermediate position with respect to the axes of rotation (b,g) respectively of the second rod (42) and of the first rod (41).

By making the first connecting rod (20) rotate in the clockwise direction, about the respective axis of rotation (C), an equal rotation, but in the opposite direction, is necessarily transmitted to the second connecting rod (30), about the respective axis of rotation (D). Two end front areas (22,32) of the two connecting rods (20,30) are therefore pushed towards one another and towards the conveyor belt (T), with symmetrical displacements with respect to the central plane (P), while two rear end areas (21,31) are moved away from one another. In this way, thanks to the two guides (2,3), the conveyor belt (T) is kept aligned with the advancement direction (X) and centred with respect to the central plane (P).

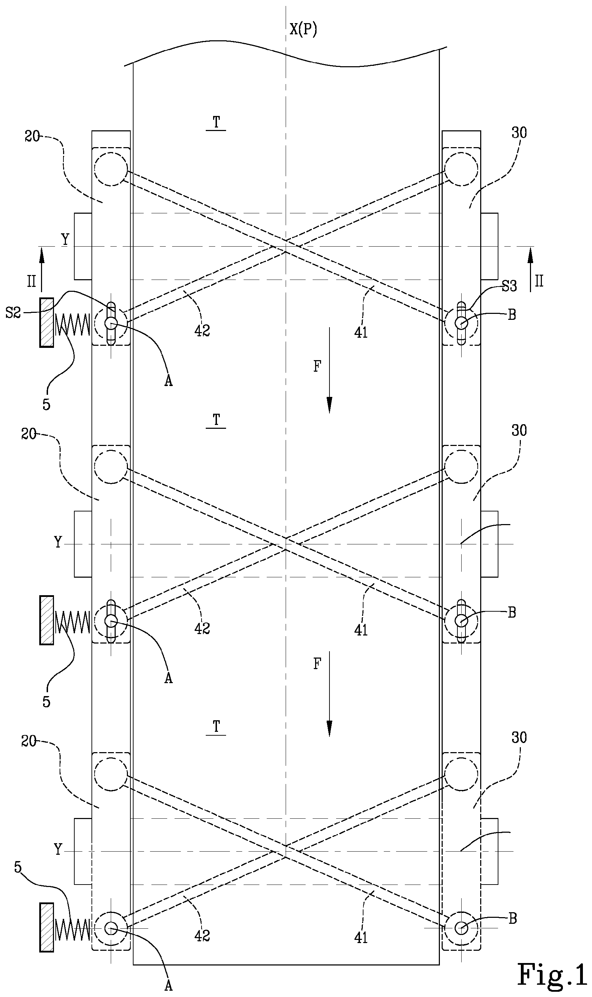

In the illustrated embodiment, the guide system comprises two transmission kinematic mechanisms (4), arranged at a certain distance from one other and aligned along the advancement direction (X). It is clearly possible to provide a larger number of transmission kinematic mechanisms (4), spaced apart from one another and aligned along the advancement direction (X), in relation to the length of the conveyor belt (T) and of the guides (2,3). In the event that there are more than two transmission kinematic mechanisms (4) arranged in series, the first guide (2) is rotatably constrained about one of the axes of rotation (a,e) to only one of the first connecting rods (20) arranged at one of the ends of the series, whereas it is slidably constrained parallel to the advancement direction (X) to the other first connecting rods (20), as shown in figure 1.

Likewise, in the event that there are more than two transmission kinematic mechanisms (4) arranged in series, the second guide (3) is rotatably constrained about one of the axes of rotation (b,g) to only one of the second connecting rods (30) arranged at one of the ends of the series, whereas it is slidably constrained parallel to the advancement direction (X) to the other second connecting rods (30), as shown in figure 1.

Each guide (2,3) connects the respective connecting rods (20,30) without preventing the displacements determined by the transmission kinematic mechanism (4), but making the displacement of each of them quicker and more precise in response to any deviations of the conveyor belt (T).

Preferably, the actuator (5) comprises an elastic means, associated with at least one from between the first connecting rod (20) and the second connecting rod (30).

In the embodiment of the transmission kinematic mechanism (4) comprising the first and the second rod (41,42), the actuator (5) may be, for example, in the form of a torsion spring, concentric to the axis of rotation (C) of the first connecting rod (20) or to the axis of rotation (D) of the second connecting rod (30). In particular, the torsion spring can be interposed between one of the two guides (2,3) and a support part of the transmission kinematic mechanism (4) and/or of the conveyor belt (T). Alternatively to the torsion spring, the actuator (5) may be in the form of a helical spring, associated with one of the two guides (2,3) and/or with one of the rods (41,42) positioned so as to exercise an eccentric thrust with respect to the axis of rotation (C,D) of the guide (2,3) with which it is associated. In both cases, the actuator (5) is able to make one from between the first or the second guide (2,3) rotate, with a determined torque, about the respective axis of rotation (C,D).

## Claims

1. A guide system for a conveyor belt (T) arranged to advance along an advancement direction (X), comprising:
a first guide (2) and a second guide (3), each of which is arranged to be positioned in contact with a respective side of the conveyor belt (T);
at least two transmission kinematic mechanisms (4), which connect the first and the second guides (2,3) to one another and are configured to transmit to the first and to the second guides (2,3) a symmetrical movement at least with respect to a longitudinal plane (P) perpendicular to the conveyor belt (T) and parallel to an advancement direction (X) of the conveyor belt (T);
an actuator (5), arranged to exercise a direct thrust orthogonally to the longitudinal plane (P) on at least one between the first and the second guides (2,3);
each transmission kinematic mechanism (4) comprises a first connecting rod (20) and a second connecting rod (30);
the first guide (2) is rotatably connected to at least one of the first connecting rods (20) about an axis of rotation (a,e);
the second guide (3) is rotatably connected to at least one of the second connecting rods (30) about an axis of rotation (b,g);
**characterised in that**:
the transmission kinematic mechanisms (4) are arranged at a certain distance from one other and aligned along the advancement direction (X);
the first guide (2) is slidably connected, along the advancement direction (X), to the other first connecting rod (20);
the second guide (3) is slidably connected, along the advancement direction (X), to the other second connecting rod (30).

2. The guide system according to claim 1, wherein:
the first guide (2) is rotatably connected to the first connecting rods about a first axis of rotation (e), and slidably, along an advancement direction (X) of the conveyor belt (T), with respect to other axes of rotation (a,e) of the first connecting rods (20) distinct from the first axis of rotation (e);
the second guide (3) is rotatably connected to the second connecting rods (30) about a first axis of rotation (g), and slidably, along an advancement direction (X) of the conveyor belt (T), with respect to other axes of rotation (b,g) of the second connecting rods (30) distinct from the first axis of rotation (g).

3. The guide system according to claim 1, wherein:
each transmission kinematic mechanism comprises a first rod (41) and a second rod (42), each of which is hinged both to the first connecting rod (20), and to the second connecting rod (30) about axes of rotation (a,b,e,g) perpendicular to the plane defined by the conveyor belt (T), and wherein the first rod (41) and the second rod (42) are arranged in crossed directions to one another on a plane perpendicular to the axes of rotation (a,b,e,g).

4. The guide system according to claim 3, comprising three or more kinematic mechanisms (4) arranged in series, aligned along the advancement direction (X), wherein:
the first guide (2) is rotatably constrained about one of the axes of rotation (a,e) to only one of the first connecting rods (20) arranged at one of the ends of the series, whereas it is slidably constrained parallel to the advancement direction (X) to the other first connecting rods (20);
the second guide (3) is rotatably constrained about one of the axes of rotation (b,g) to only one of the second connecting rods (30) arranged at one of the ends of the series, whereas it is slidably constrained parallel to the advancement direction (X) to the other second connecting rods (30).

5. The guide system according to claim 3 or 4, wherein the first connecting rod (20) and the second connecting rod (30) rotate about respective axes of rotation (c,d) parallel to one another and parallel to the axes of rotation (a,b,e,g) of the first and the second rod (41,42).

6. The guide system according to claim 5, wherein in each connecting rod (20,30), the axis of rotation (c,d) is arranged in an intermediate position with respect to the axes of rotation (a,b,e,g) of the first and the second rods rod (41,42).

7. The guide system according to one of the preceding claims, wherein the actuator (5) comprises an elastic means, associated with at least one from between the first connecting rod (20) and the second connecting rod (30).

## Patentansprüche

1. Führungssystem für ein Förderband (T), das angeordnet ist, um sich entlang einer Vorschubrichtung (X) vorwärtszubewegen, umfassend:
eine erste Führung (2) und eine zweite Führung (3), von denen eine jede angeordnet ist, um in Kontakt mit einer jeweiligen Seite des Förderbands (T) positioniert zu werden;
mindestens zwei kinematische Getriebemechanismen (4), die die erste und die zweite Führung (2,3) miteinander verbinden und ausgelegt sind, um der ersten und der zweiten Führung (2,3) eine symmetrische Bewegung zumindest bezüglich einer Längsebene (P) senkrecht zum Förderband (T) und parallel zu einer Vorschubrichtung (X) des Förderbandes (T) zu übertragen;
einen Aktor (5), der angeordnet ist, um einen direkten Schub orthogonal zu der Längsebene (P) auf mindestens eine zwischen der ersten und der zweiten Führung (2,3) auszuüben;
ein jeder kinematischer Getriebemechanismus (4) eine erste Verbindungsstange (20) und eine zweite Verbindungsstange (30) umfasst;
die erste Führung (2) um eine Drehachse (a,e) drehbar mit mindestens einer der ersten Verbindungsstangen (20) verbunden ist;
die zweite Führung (3) um eine Drehachse (b,g) drehbar mit mindestens einer der zweiten Verbindungsstangen (30) verbunden ist;
**dadurch gekennzeichnet, dass**:
die kinematischen Getriebemechanismen (4) in einem bestimmten Abstand voneinander angeordnet und entlang der Vorschubrichtung (X) ausgerichtet sind;
die erste Führung (2) entlang der Vorschubrichtung (X) verschiebbar mit der anderen ersten Verbindungsstange (20) verbunden ist;
die zweite Führung (3) entlang der Vorschubrichtung (X) verschiebbar mit der anderen zweiten Verbindungsstange (30) verbunden ist.

2. Führungssystem nach Anspruch 1, wobei:
die erste Führung (2) drehbar mit den ersten Verbindungsstangen um eine erste Drehachse (e) und verschiebbar entlang einer Vorschubrichtung (X) des Förderbands (T) in Bezug auf andere Drehachsen (a,e) der ersten Verbindungsstangen (20), die sich von der ersten Drehachse (e) unterscheiden, verbunden ist;
die zweite Führung (3) drehbar mit den zweiten Verbindungsstangen (30) um eine erste Drehachse (g) und verschiebbar entlang einer Vorschubrichtung (X) des Förderbands (T) in Bezug auf andere Drehachsen (b,g) der zweiten Verbindungsstangen (30), die sich von der ersten Drehachse (g) unterscheiden, verbunden ist.

3. Führungssystem nach Anspruch 1, wobei:
ein jeder kinematischer Getriebemechanismus eine erste Stange (41) und eine zweite Stange (42) umfasst, von denen jede sowohl an der ersten Verbindungstange (20) als auch an der zweiten Verbindungstange (30) um Drehachsen (a,b,e,g) senkrecht zu der durch das Förderband (T) definierten Ebene angelenkt ist, und wobei die erste Stange (41) und die zweite Stange (42) in gekreuzten Richtungen zueinander auf einer Ebene senkrecht zu den Drehachsen (a,b,e,g) angeordnet sind.

4. Führungssystem nach Anspruch 3, umfassend drei oder mehr hintereinander angeordnete kinematische Mechanismen (4), die entlang der Vorschubrichtung (X) ausgerichtet sind, wobei:
die erste Führung (2) um eine der Drehachsen (a,e) drehbar auf nur eine der ersten Verbindungsstangen (20), die an einem der Enden der Reihe angeordnet sind, festgespannt ist, während sie parallel zur Vorschubrichtung (X) verschiebbar auf die anderen ersten Verbindungsstangen (20) festgespannt ist;
die zweite Führung (3) um eine der Drehachsen (b,g) drehbar auf nur eine der zweiten Verbindungsstangen (30) die an einem der Enden der Reihe angeordnet sind, festgespannt ist, während sie parallel zur Vorschubrichtung (X) verschiebbar auf die anderen zweiten Verbindungsstangen (30) festgespannt ist.

5. Führungssystem nach Anspruch 3 oder 4, wobei sich die erste Verbindungsstange (20) und die zweite Verbindungsstange (30) um jeweilige Drehachsen (c,d) parallel zueinander und parallel zu den Drehachsen (a,b,e,g) der ersten und der zweiten Stange (41,42) drehen.

6. Führungssystem nach Anspruch 5, wobei in einer jeden Verbindungsstange (20,30) die Drehachse (c,d) in einer Zwischenposition in Bezug auf die Drehachsen (a,b,e,g) der ersten und der zweiten Stangenstange (41,42) angeordnet ist.

7. Führungssystem nach einem der vorhergehenden Ansprüche, wobei der Aktor (5) elastische Mittel umfasst, die mit mindestens einem zwischen der ersten Verbindungsstange (20) und der zweiten Verbindungsstange (30) assoziiert sind.

## Revendications

1. Système de guidage pour une bande transporteuse (T) disposée pour avancer dans une direction d'avancement (X), comprenant :
un premier guide (2) et un second guide (3), chacun étant disposé pour être positionné en contact avec un côté respectif de la bande transporteuse (T) ;
au moins deux mécanismes cinématiques de transmission (4), qui relient les premier et second guides (2, 3) l'un à l'autre et sont configurés pour transmettre aux premier et second guides (2, 3) un mouvement symétrique au moins par rapport à un plan longitudinal (P) perpendiculaire à la bande transporteuse (T) et parallèle à une direction d'avancement (X) de la bande transporteuse (T) ;
un actionneur (5), disposé pour exercer une poussée directe orthogonalement au plan longitudinal (P) sur au moins l'un entre les premier et second guides (2, 3) ;
chaque mécanisme cinématique de transmission (4) comprend une première bielle (20) et une seconde bielle (30) ;
le premier guide (2) est relié de manière rotative à l'au moins une des premières bielles (20) autour d'un axe de rotation (a, e) ;
le second guide (3) est relié de manière rotative à l'au moins une des secondes bielles (30) autour d'un axe de rotation (b, g) ;
**caractérisé en ce que** :
les mécanismes cinématiques de transmission (4) sont disposés à une certaine distance les uns des autres et alignés le long de la direction d'avancement (X) ;
le premier guide (2) est relié de manière coulissante, le long de la direction d'avancement (X), à l'autre première bielle (20) ;
le second guide (3) est relié de manière coulissante, le long de la direction d'avancement (X), à l'autre second bielle (30).

2. Système de guidage selon la revendication 1, dans lequel :
le premier guide (2) est relié de manière rotative aux premières bielles autour d'un premier axe de rotation (e), et de manière coulissante, le long d'une direction d'avancement (X) de la bande transporteuse (T), par rapport à d'autres axes de rotation (a, e) des premières bielles (20) distincts du premier axe de rotation (e) ;
le second guide (3) est relié de manière rotative aux secondes bielles (30) autour d'un premier axe de rotation (g), et de manière coulissante, le long d'une direction d'avancement (X) de la bande transporteuse (T), par rapport à d'autres axes de rotation (b, g) des secondes bielles (30) distincts du premier axe de rotation (g).

3. Système de guidage selon la revendication 1, dans lequel :
chaque mécanisme cinématique de transmission comprend une première tige (41) et une seconde tige (42), chacune étant articulée à la fois à la première bielle (20) et à la seconde bielle (30) autour d'axes de rotation (a, b, e, g) perpendiculaires au plan défini par la bande transporteuse (T), et dans lequel la première tige (41) et la seconde tige (42) sont disposées dans des directions croisées l'une par rapport à l'autre sur un plan perpendiculaire aux axes de rotation (a, b, e, g).

4. Système de guidage selon la revendication 3, comprenant trois mécanismes cinématiques (4) ou plus disposés en série, alignés le long de la direction d'avancement (X), dans lequel :
le premier guide (2) est contraint en rotation autour de l'un des axes de rotation (a, e) à une seule des premières bielles (20) disposées à l'une des extrémités de la série, tandis qu'il est contraint de façon coulissante parallèlement à la direction d'avancement (X) aux autres premières bielles (20) ;
le second guide (3) est contraint en rotation autour de l'un des axes de rotation (b, g) à une seule des secondes bielles (30) disposées à l'une des extrémités de la série, tandis qu'il est contraint de façon coulissante parallèlement à la direction d'avancement (X) aux autres secondes bielles (30).

5. Système de guidage selon la revendication 3 ou 4, dans lequel la première bielle (20) et la seconde bielle (30) tournent autour d'axes de rotation (c, d) respectifs parallèles entre eux et parallèles aux axes de rotation (a, b, e, g) de la première et de la seconde tiges (41, 42).

6. Système de guidage selon la revendication 5, dans lequel, dans chaque bielle (20, 30), l'axe de rotation (c, d) est disposé dans une position intermédiaire par rapport aux axes de rotation (a, b, e, g) de la première et de la seconde tige (41, 42).

7. Système de guidage selon l'une des revendications précédentes, dans lequel l'actionneur (5) comprend des moyens élastiques, associés à au moins l'une d'entre la première bielle (20) et la seconde bielle (30).
